Europäisches Patentamt

European Patent Office

Office européen des brevets

(11) Veröffentlichungsnummer: **0 289 997 B1**

## (12) EUROPÄISCHE PATENTSCHRIFT

(45) Veröffentlichungstag der Patentschrift: **12.01.94**

(21) Anmeldenummer: **88107122.9**

(22) Anmeldetag: **04.05.88**

Die Akte enthält technische Angaben, die nach dem Eingang der Anmeldung eingereicht wurden und die nicht in dieser Patentschrift enthalten sind.

(51) Int. Cl.5: **C09D 133/06**

---

(54) **Überzugsmittel und dessen Verwendung bei Verfahren zur Herstellung von Mehrschichtüberzügen.**

---

(30) Priorität: **08.05.87 DE 3715254**

(43) Veröffentlichungstag der Anmeldung:
**09.11.88 Patentblatt 88/45**

(45) Bekanntmachung des Hinweises auf die Patenterteilung:
**12.01.94 Patentblatt 94/02**

(84) Benannte Vertragsstaaten:
**BE DE ES FR GB IT SE**

(56) Entgegenhaltungen:
**EP-A- 0 071 070**

(73) Patentinhaber: **Herberts Gesellschaft mit beschränkter Haftung**
**Christbusch 25**
**D-42285 Wuppertal(DE)**

(72) Erfinder: **Bederke, Klaus, Dr.**
**Oststrasse 36**
**D-4322 Sprockhövel 2(DE)**
Erfinder: **Kerber, Hermann**
**Daniel-Schürmann-Weg 37**
**D-5600 Wuppertal 21(DE)**

(74) Vertreter: **Türk, Gille, Hrabal, Leifert**
**Brucknerstrasse 20**
**D-40593 Düsseldorf (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.9/3.3.3)

**Beschreibung**

Die Erfindung betrifft ein Überzugmittel, das zur Erzeugung einer Basisschicht geeignet ist, die bei der Herstellung härtbarer Mehrschichtüberzüge Verwendung finden soll. Das erfindungsgemäße Überzugsmittel enthält ein hydroxylgruppenhaltiges (Meth)acryl-Copolymerisat, Vernetzungsmittel, Effektpigmente und/oder farbgebende Pigmente. Die Erfindung betrifft auch Verfahren zur Herstellung von Mehrschichtüberzügen unter Verwendung des erfindungsgemäßen überzugsmittels, sowie die Verwendung des überzugsmittels für diesen Zweck.

In der EP-A-O 071 070 werden Überzugsmittel auf der Basis von Copolymerisat-Dispersionen beschrieben, die auf Glycidylestern einer verzweigten Monocarbonsäure, Vinylestern einer verzweigten Monocarbonsäure, ungesättigten Dicarbonsäuren, Hydroxylalkylester einer ungesättigten Monocarbonsäure, (Meth)acrylsäureester und Styrol basieren.

Überzugsmittel zur Herstellung von Überzügen mit Metallic-Effekt sind bekannt. So wird in der DE-A-35 24 831 ein Metallic-Lackierverfahren beschrieben, bei dem ein zu lackierender Gegenstand zuerst mit einer ersten Schicht vorlackiert werden muß, worauf mit einem hitzehärtenden Metallic-Lack mit hohem Feststoffgehalt überlackiert wird und auf die so erhaltende kalte Schicht ein hitzehärtender Klarlack zu einer dritten Schicht aufgebracht wird. Dieses Verfahren weist den Nachteil auf, daß eine Vorlackierung des zu beschichtenden Substrats notwendig ist. Man hat auch versucht eine derartige Vorlackierung zu vermeiden. In der DE-A-19 49 372 wird ein zu lackierender Gegenstand, beispielsweise eine grundierte Kraftfahrzeugkarosserie direkt mit einem Metallic-Lack lackiert, auf den seinerseits ein Klarlack-Topcoat aufgebracht wird. Um die Vorlackierung vermeiden zu können, ist es jedoch nach diesem Verfahren notwendig, hohe Anteile an Celluloseacetobutyrat einzusetzen, welches hohe Lösemittelmengen erfordert.

Aufgabe der vorliegenden Erfindung ist die Bereitstellung von Überzugsmitteln, die als Basisschicht bei der Herstellung härtbarer Mehrschichtüberzüge verwendet werden können, wobei einerseits eine Vorlackierung vermeidbar ist und andererseits der Zusatz einer großen Lösemittelmenge vermieden werden kann.

Diese Aufgabe wird durch das Überzugsmittel des eingangs definierten Gattungsbegriffs gelöst, das dadurch gekennzeichnet ist, daß es als Bindemittel ein (Meth)acryl-Copolymerisat enthält, das im wesentlichen erhältlich ist aus:

a) 0.1 - 20 Gew.-% (Meth)acrylamid und/oder N-substituierten (Meth)-acrylamiden,

b) 5.0 - 40 Gew.-% eines Umsetzungsprodukts aus Glycidyl-(meth)-acrylat mit aromatischen Monocarbonsäuren und/oder aromatischen Dicarbonsäuremonoestern, wobei das Verhältnis Oxiran-Gruppe zu Carboxyl-Gruppe 1:1 bis 1,5:1 sein soll,

c) 10 - 40 Gew.-% eines Hydroxyalkylesters der (Meth)acrylsäure mit 2-8 C-Atomen im Hydroxyalkylrest,

d) 30 - 84.9 Gew.-% eines Alkylesters der (Meth)acrylsäure,

wobei die Summe der Komponenten a) bis d) 100 % beträgt.

Die vorstehende Komponente a) ist in dem erfindungsgemäß eingesetzten (Meth)acryl-Copolymerisat bevorzugt in einer Menge von 0,5 bis 10 Gew.-% enthalten. Eine bevorzugte Menge des Umsetzungsproduktes b) liegt bei 10 bis 30 Gew.-%.

Es hat sich gezeigt, daß es mit dem erfindungsgemäßen Überzugsmittel möglich ist, härtbare mehrschichtige Überzüge durch Naß-in-Naß-Auftrag herzustellen, wobei das das Effektpigment enthaltende Überzugsmittel ohne Vorlackierung aufgebracht werden kann und lediglich einer Überlackierung mit einem Klarlack bedarf. Das erfindungsgemäße Überzugsmittel kann mit einem hohen Festkörpergehalt appliziert werden, der in der Größenordnung von 20 bis 45 % liegen kann. Hierdurch ergibt sich ein großer Vorteil im Hinblick auf die bisher benötigten hohen Lösemittelmengen; die nach dem vorstehenden Stand der Technik eingesetzten Überzugsmittel konnten beispielsweise nur mit einem Festkörpergehalt von etwa 10 - 15 % appliziert werden. Es ergeben sich somit beträchtliche Vorteile bezüglich der Einsparung der Lösemittel, sowie im Hinblick auf die damit. einhergehende verringerte Umweltbelastung.

Es hat sich gezeigt, daß diese Vorteile durch die Zusammensetzung des erfindungsgemäßen Überzugsmittels erzielt wird, welches das vorstehend definierte Copolymerisat erhält.

Die Herstellung des in dem erfindungsgemäßen Überzugsmittel enthaltenen Copolymerisats kann durch Polymerisation nach üblichen Verfahren, z. B. der Substanz-, Löse- oder Perlpolymerisation durchgeführt werden. Die verschiedenen Polymerisationsverfahren sind gut bekannt und beschrieben in: Houben-Weyl, Methoden der Organischen Chemie, 4. Aufl., Band 14/1, S. 24-255 (1961).

Das Lösungspolymerisationsverfahren wird für die Herstellung des erfindungsgemäßen eingesetzten Copolymerisats bevorzugt. Bei diesem Verfahren wird z.B. das Lösemittel in das Reaktionsgefäß vorlegt, auf Siedetemperatur geheizt und das Monomeren/Initiatorgemisch kontinuierlich in einer bestimmten Zeit zudosiert.

Die Polymerisation wird bevorzugt bei Temperaturen zwischen 60°C und 160°C, besonders bevorzugt bei 80°C bis 140°C durchgeführt.

Die Polymerisationsreaktion wird mit bekannten Polymerisationsinitiatoren gestartet. Geeignete Initiatoren sind Per- und Azo-Verbindungen, die in einer Reaktion 1.Ordnung thermisch in Radikale zerfallen. Initiatorart und -menge werden so gewählt, daß bei der Polymerisationstemperatur während der Zulaufphase ein möglichst konstantes Radikalangebot vorliegt.

Beispiele für bevorzugt eingesetzte Initiatoren für die Polymerisation sind: Dialkylperoxide, wie Di-tert.-butylperoxid, Di-cumylperoxid; Diacylperoxide, wie Di-benzoylperoxid, Di-lauroylperoxid; Hydroperoxide, wie Cumolhydroperoxid, tert.-Butylhydroperoxid; Perester, wie tert.-Butyl-perbenzoat, tert.-Butyl-perpivalat, tert.-Butyl-per-3,5,5-trimethylhexanoat, tert.-Butyl-per-2-ethylhexanoat; Peroxydicarbonate, wie Di-2-ethylhexyl-peroxydicarbonat, Dicyclohexyl-peroxydicarbonat; Perketale, wie 1,1-Bis-(tert.-Butylperoxy)3,5,5-trimethylcyclo-hexan, 1,1-Bis(tert.-Butylperoxy) cyclohexan; Ketonperoxide, wie Cyclohexanonperoxid, Methylisobutylketonperoxid; und Azo-Verbindungen, wie 2,2'-Azo-bis(2,4-dimethylvaleronitril), 2,2'-Azo-bis(2-methylbutyronitril), 1,1'-Azo-bis-cyclohexancarbonitril und Azo-bis-isobutyronitril.

Es ist bevorzugt die Polymerisationsinitiatoren, insbesondere die Perester in einer Menge von 0,1 bis 3 Gew.-%, bezogen auf die Monomeren-Einwaage, einzusetzen.

Als organische Lösemittel die zweckmäßigerweise bei der Lösungspolymerisation sowie später auch in den erfindinngsgemäßen Überzugsmitteln eingesetzt werden, eignen sich beispielsweise: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon, Isophoron; und Alkohole, wie Methanol, Ethanol, n-Propanol, iso-Propanol, n-Butanol, iso-Butanol, sek.-Butanol, tert.-Butanol, Hexanol, 2-Ethyl-hexanol. Aromatische Kohlenwasserstoffe, wie Xylol, Solvesso 100, (Kohlenwasserstoffgemisch, eingetragenes Warenzeichen) und aliphatische Kohlenwasserstoffe können ebenfalls im Verschnitt mit den oben genannten Lösemitteln eingesetzt werden.

Zur Regelung des Molekulargewichts können insbesondere bei der bevorzugten Lösungspolymerisation Kettenüberträger mitverwendet werden. Beispiele sind Mercaptane, Thioglykolsäureester, Chlorkohlenwasserstoffe.

Die Polymerisationsbedingungen (Reaktionstemperatur, Zulaufzeit der Monomerenmischung, Lösungskonzentration) werden so eingerichtet, daß die erfindungsgemäß hergestellten (Meth)acryl-Copolymerisate ein Zahlenmittel (bestimmt durch Gelpermeationschromatographie unter Verwendung von Polystyrol als Eichsubstanz) zwischen 2000 und 30000 aufweisen.

Die erfindungsgemäß hergestellten (Meth)acryl-Copolymerisate liegen in einem Glasübergangstemperatur-Bereich von -20°C bis +80°C, berechnet aus der in der Literatur angegebenen Glasübergangstemperatur der Homopolymerisate der einzelnen Monomeren (FOX-Gleichung, s. z.B. Polymere Werkstoffe, Batzer, 1985, Seite 307).

Als Monomerkomponente a) kommen bevorzugt die folgenden Verbindungen infrage:
Acrylamid, Methacrylamid und N-substituierte (Meth)acrylamide. Beispiele für N-substituierte (Meth)-acrylamide sind: N-Methyl-, N-Ethyl-, N-n-Propyl-, N-Isopropyl-, N-n-Butylacrylamid, N-Methylmethacrylamid, N-(1,1-dimethyl-3-oxo-butyl)-acrylamid, N-tert.-Butyl-methacrylamid, N-Decylacrylamid, N-Cyclohexyl-methacrylamid, N-Benzylmethacrylamid, wobei Acrylamid, Methacrylamid und N-tert.-Butylmethacrylamid bevorzugt sind.

Die Monomerkomponente b) stellt ein Umsetzungsprodukt aus Glycidylacrylat oder Glycidylmethacrylat mit aromatischen Monocarbonsäuren oder aromatischen Dicarbonsäuremonoestern dar. Beispiele für aromatische Monocarbonsäuren sind: Benzoesäure, p-tert.-Butylbenzoesäure, Naphthalin-1-carbonsäure, Naphthalin-2-carbonsäure. Beispiele für Dicarbonsäuremonoester sind: Phthalsäure-monoester, wie z.B. o-Phthalsäure-monoester, Naphthal-indicarbonsäuremonoester z.B. Naphthalsäuremonoester aus 1,8-Naphthalsäureanhydrid hergestellt. Das Verhältnis Oxiran-Gruppe zu Carboxyl-Gruppe beträgt 1:1 bis 1,5:1.

Bevorzugt eingesetzt wird das Umsetzungsprodukt aus Glycidylmethacrylat und Benzoesäure.

Beispiele für die Monomerkomponente c) sind Hydroxyalkylester der Acrylsäure und Methacrylsäure. Als Hydroxyalkylester der Acrylsäure oder Methacrylsäure sind z.B. geeignet solche mit aliphatischen Diolen mit bevorzugt 2 bis 6 Kohlenstoffatomen. Hierfür sind besonders bevorzugte Beispiele $\beta$-Hydroxyethylacrylat, $\beta$-Hydroxyethylmethacrylat, $\beta$-Hydroxypropylacrylat, $\beta$-Hydroxypropylmethacrylat, Butandiol-1,4-monoacrylat, Butandiol-1,4-monomethacrylat, Hexandiol-1,6-monoacrylat, Hexandiol-1,6-monomethacrylat.

Beispiele für die Monomerkomponente d), nämlich Alkylester der Acrylsäure oder Methacrylsäure sind: Methylacrylat, Methylmethacrylat, Ethylacrylat, Ethylmethacrylat, Iso-Propylmethacrylat, tert.-Butylacrylat, n-Butylacrylat, n-Butylmethacrylat, Iso-Butylacrylat, Iso-Butylmethacrylat, Cyclohexylmethacrylat, Trimethylcyclohexylmethacrylat, 2-Ethylhexylacrylat, 2-Ethylhexylmethacrylat, Laurylacrylat, Laurylmethacrylat, Stea-

3

rylacrylat, Stearylmethacrylat, die gegebenenfalls substituiert sind.

Die erfindungsgemäß verwendeten (Meth)acryl-Copolymerisate werden mit Vernetzungsmitteln wie Aminharzen oder Polyisocyanatharzen kombiniert.

Zu geeigneten Aminharzen zählen beispielsweise alkylierte Kondensate, die durch Umsetzung von Aminotriazinen und Amidotriazinen mit Aldehyden hergestellt werden. Nach bekannten technischen Verfahren werden Amino- oder Amidogruppen tragende Verbindungen wie Melamin, Formoguanamin, Acetoguanamin, Benzoguanamin, Dicyandiamid, Harnstoff, N,N'-Ethylenharnstoff in Gegenwart von Alkoholen, wie Methyl-, Ethyl-, Propyl-, iso-Butyl-, n-Butyl- und Hexylalkohol mit Aldehyden, insbesondere Formaldehyd, kondensiert. Die Reaktivität derartiger Aminharze wird bestimmt durch den Kondensationsgrad, das Verhältnis der Amin- bzw. Amid-Komponente zu Formaldehyd und durch die Art des verwendeten Veretherungsalkohols. Beispiele für derartige Aminharze und ihre Herstellung werden in Houben-Weyl, Methoden der Organischen Chemie, IV Auflage, 1963, Seite 357 ff. beschrieben.

Das Mengenverhältnis erfindungsgemäß verwendetes (Meth)acryl-Copolymerisat zu Aminharz beträgt bevorzugt 80:20 bis 60:40 (fest auf fest gerechnet).

Der Anteil an Polyisocyanat-Vernetzer wird so gewählt, daß auf eine Hydroxyl-Gruppe des (Meth)acryl-Copolymerisats 0,5 bis 1,5 Isocyanat-Gruppen entfallen. Überschüssige Isocyanat-Gruppen können durch Feuchtigkeit abreagieren und zur Vernetzung beitragen.

Beispiele für die Polyisocyanatvernetzer sind übliche Lackpolyisocyanate, wie beispielsweise aliphatische, cycloaliphatische und aromatische Polyisocyanate verwendet werden, z.B. Hexamethylendiisocyanat, Trimethylhexamethylendiisocyanat, Isophorondiisocyanat, 4,4'-Diisocyanato-dicyclohexylmethan, Toluylen-2,4-Diisocyanat, o-, m- und p-Xylylendiisocyanat, 4,4'-Diisocyanato-diphenylmethan; mit CH-, NH- oder OH-aciden Verbindungen verkappte Polyisocyanate; Biuret-, Allophanat-, Urethan-, oder Isocyanurat-Gruppen enthaltende Polyisocyanate. Beispiele für derartige Polyisocyanate sind ein Biuret-gruppen enthaltendes Umsetzungsprodukt aus 3 Molen Hexamethylendiisocyanat mit 1 Mol Wasser mit einem NCO-Gehalt von ca. 22 % (entsprechend dem Handelsprodukt Desmodur N[R] BAYER AG); ein Isocyanuratgruppen enthaltendes Polyisocyanat, das durch Trimerisierung von 3 Molen Hexamethylendiisocyanat hergestellt wird mit einem NCO-Gehalt von etwa 21.5 % (entsprechend dem Handelsprodukt Desmodur N 3390[R] BAYER AG); oder Urethangruppen enthaltende Polyisocyanate, welche Reaktionsprodukte darstellen aus 3 Molen Toluylendiisocyanat und 1 Mol Trimethylolpropan mit einem NCO-Gehalt von etwa 17,5 % (entsprechend dem Handelsprodukt Desmodur L[R] BAYER AG).

Bevorzugt eingesetzt werden Desmodur N[R] und Desmodur N 3390[R].

Im Falle des Einsatzes von Isocyanatvernetzern handelt es sich beim erfindinngsgemäßen Überzugsmittel um ein 2-Komponenten-System.

Die erfindinngsgemäßen Überzugsmittel werden durch Vermischen der einzelnen Komponenten hergestellt. Bei der Herstellung werden in üblicher Weise Effektpigmente und/oder farbgebende Pigmente sowie gegebenenfalls übliche lacktechnische Hilfsstoffe eingearbeitet.

So können die Überzugsmittel die das erfindungsgemäß einzusetzende (Meth) acryl-Copolymerisat enthalten, neben den bereits genannten Lösemitteln zusätzlich lacktübliche Hilfsstoffe enthalten, wie beispielsweise Verlaufund Viskositäts-steuernde Mittel auf der Basis von z.B. (Meth)acryl-Homopolymerisaten, Celluloseestern, Silikonölen. Weichmacher auf der Basis von z.B. Phosphorsäure-, Phthalsäure- oder Zitronensäureestern. Antiabsetzmittel, wie Montmorillonit, pyrogenes Siliziumdioxid, hydriertes Ricinusöl. Härtungsbeschleuniger für die Umsetzung des erfindiungsgemäßen (Meth)acryl-Copolymerisats mit Aminharzen oder Polyisocyanatharzen z.B.: Phosphorsäure, Phosphorsäureester, Dicarbonsäure-Halbester, Zitronensäure; organische Metallsalze, wie Dibutylzinndilaurat, Zink-Naphthenat, ferner tertiäre Aminogruppen enthaltende Verbindungen wie Triethylamin. Wachspasten, beispielsweise Wachsdisperionen auf der Basis von z.B. Ethylen-Copolymerisaten für die Fixierung der Metallpigmente bei der Herstellung der Basisschicht.

Für die Herstellung der Basisschichten, die das erfindungsgemäße (Meth)-acryl-Copolymerisat enthalten, werden Pigmente und gegebenenfalls Füllstoffe verwendet. Es können lacktübliche transparente und/oder deckende Farbpigmente eingesetzt werden. Bei den Effektpigmeriten kann es sich um übliche Effektpigmente, wie übliche Metall-Schuppenpigmente und/oder Perlglanzpigmente handeln. Zur Erzielung brillanter polychromatischer Metallic-Effekte werden bevorzugt Aluminiumpigmente, die aus hochreinem Aluminium (99,99%) hergestellt werden, mit transparenten anorganischen oder organischen Pigmenten eingesetzt. Werden dekorative Effekte gewünscht, so können Perlglanzpigmente eingesetzt werden.

Die erfindinngsgemäßen Überzugsmittel sind besonders geeignet zur Erzeugung einer Basisschicht bei der Herstellung härtbarer Mehrschichtüberzüge. Sie können ohne Vorlackierung auf das zu lackierende Substrat aufgebracht werden. Sie eignen sich insbesondere für die Lackierung von Kraftfahrzeugkarosserien und deren Teile. Sie weisen den Vorteil auf, daß sie mit einem hohen Festkörpergehalt appliziert werden können. Die Deckschicht, bei der es sich um eine transparente Klarlackschicht handelt, kann nach dem Naß-in-Naß-Verfahren aufgetragen werden, worauf beide Schichten, Basisschicht und Deckschicht, gemeinsam gehärtet werden. Die Erfindung betrifft daher auch das Verfahren zur Herstellung eines Mehrschichtüberzuges bzw. die Verwendung der Überzugsmittel zur Herstellung von Basisschichten für härtbare Mehrschichtüberzüge.

Die folgenden Beispiele dienen zur Erläuterung der Erfindung. Alle Teile beziehen sich auf das Gewicht.

Herstellung der Vorprodukte 1-3

(Umsetzungsprodukte aus Glycidyl(meth)acrylat mit aromatischen Monocarbonsäuren bzw. aromatischen Dicarbonsäuremonoestern).

Vorprodukt 1

In einen 2l-Dreihals-Schliffkolben, der mit einem Rührwerk, Kontaktthermometer und Kugelkühler ausgerüstet ist, werden 625,3 g Glycidylmethacrylat und 0,2 g Hydrochinon gefüllt und unter Rühren auf 60°C geheizt. Dann werden 374,5 g Benzoesäure hinzugefügt und das Reaktionsgemisch unter Rückflußkühlung auf 120°C geheizt. Bei dieser Temperatur wird der Ansatz gehalten, bis die Säurezahl < 1 beträgt. Nach Fertigstellung hatte das Vorprodukt 1 eine Viskosität von 100 mPa.s und eine Säurezahl von 0,5 mg KOH/g.

Vorprodukt 2

Unter den gleichen Reaktionsbedingungen wie oben beschrieben werden 533,6 g Glycidylmethacrylat, 0,2 g Hydrochinon und 466,2 g para-tert.-Butylbenzoesäure umgesetzt. Das Reaktionsprodukt hatte eine Viskosität von 352 mPa.s und eine Säurezahl von 0,2 mg KOH/g.

Vorprodukt 3

In der gleichen Apparatur wie oben beschrieben, werden 242 g Benzylalkohol und 314,7 g Phthalsäureanhydrid bei 130°C 90 Minuten lang zu Reaktion gebracht. Danach wird auf 80°C abgekühlt. Nach Zugabe von 443,1 g Glycidylmethacrylat und 0,2 g Hydrochinon wird auf 120°C geheizt. Das Reaktionsgut wird bei 120°C gehalten, bis die Säurezahl 0,6 mg KOH/g und die Viskosität 3660 mPa.s beträgt.

Beispiele 1 bis 5

Herstellung der (Meth)acryl-Copolymerisate

In einen 2l-Dreihals-Schliffkolben, der mit einem Rührwerk, Kontaktthermometer, Kugelkühler und Tropftrichter ausgerüstet ist, wird Pos. I (Mengenangaben sind der Tabelle 1 zu entnehmen) vorgelegt und unter Rühren bei eingeschalteter Rückflußkühlung auf 124°C geheizt.

Innerhalb von 5 Stunden wird Pos. II (Monomerengemisch + Initiator) kontinuierlich aus dem Tropftrichter heraus zudosiert. Die Temperatur steigt gegen Ende der Zulaufzeit auf 125°C an. Nach Zulaufende wird der Tropftrichter mit Pos. III nachgespült und zum Reaktionsgemisch hinzugefügt. Anschließend wird der Ansatz 4 Stunden bei 124-126°C nachpolymerisiert, so daß die Umsetzung > 99 % ist.

T A B E L L E 1:
==================

(Einwaage in Gramm)

| Position: | Bestandteil: | Komponente: | Beispiele: | | | | |
|---|---|---|---|---|---|---|---|
| | | | 1 | 2 | 3 | 4 | 5 |
| I | Butylacetat | | 350 | 350 | 350 | 350 | 350 |
| II | Acrylamid | a) | 10 | – | – | 10 | 10 |
| | N-tert.-Butylmethacrylamid | a) | – | 19 | – | – | – |
| | N-Cyclohexylmethacrylamid | a) | – | – | 23 | – | – |
| | Vorprodukt 1 | b) | 130 | 130 | 130 | – | – |
| | Vorprodukt 2 | b) | – | – | – | 130 | – |
| | Vorprodukt 3 | b) | – | – | – | – | 130 |
| | Hydroxypropylacrylat | c) | 185 | 185 | 185 | 185 | 185 |
| | Isobutylacrylat | d) | 138 | 138 | 138 | 138 | 138 |
| | Methylmethacrylat | d) | 143 | 134 | 130 | 143 | 143 |
| | tert.-Butylperoxybenzoat | | 14 | 14 | 14 | 14 | 14 |
| III | Butylacetat | | 30 | 30 | 30 | 30 | 30 |
| $\Sigma$ | | | 1000 ==== | 1000 ==== | 1000 ==== | 1000 ==== | 1000 ==== |
| **Kennzahlen:** | | | | | | | |
| Festkörper (%): | | | 62.4 | 61.8 | 62.3 | 61.9 | 61.6 |
| Viskosität (mPa.s b.25°C): | | | 5770 | 3310 | 5550 | 4000 | 4880 |
| Säurezahl (bez.a.Festharz): | | | 3.5 | 3.7 | 4.2 | 3.6 | 4.3 |

Herstellung von Basislacken

Basislackbeispiele 1 und 2:

32,4 Teile (Meth)acryl-Copolymerisat (Basislackbeispiel 1: Copolymerisat des Beispiels 1 der Tabelle 1; Basislackbeispiet 2: Copolymerisat des Beispiels 2 der Tabelle 1) werden vermischt mit 15,0 Teilen n-Butanol/iso-Butanol-mischveretherten, mittelreaktiven Melaminharzes, mit einem Festkörper von 55 %.

Die so erhaltene Bindemittelmischung wird mit 8,0 Teilen Butylacetat und 6,0 Teilen Butylglykolacetat verdünnt. Dann werden 10,6 Teile eines Celluloseacetobutyratesters, mit 37 % Buttersäure und 13,5 % Essigsäure verestert, mit einem OH-Gehalt von 1,5 % (gelöst 25 %-ig in Butylacetat) hinzugefügt und es wird mit 9,0 Teilen einer 6 %-igen Wachsdispersion auf der Basis eines Ethylen-Acryl-Copolymers mit einer Säurezahl von 40 versetzt. 19,0 Teile einer 33,3 %-igen Paste eines oberflächenbehandelten mittelfeinen Aluminiumpulvers in hochsiedenden aliphatischen Lösemitteln,die vorher in Butylacetat-Xylol im Verhältnis 40/26,7 gründlich aufgeschlemmt wurde, wurden zur o.g. Mischung gefügt. Nach dem Einstellen mit Butylacetat auf eine Spritzviskosität von 25 Sek. ISO resultierte ein Festkörpergehalt (1 Stunde 120°C) von ca. 23 % bzw. 24 %.

Basislackbeispiel 3:

17,8 Teile des im Beispiel 2 der Tabelle 1 hergestellten Copolymerisats werden mit 8,8 Teilen des vorstehend verwendeten n-Butanol/iso-Butanol mischveretherten Melaminharzes versetzt und mit 16,5 Teilen Butylacetat verdünnt. Dann werden 28,3 Teile einer Schwarz-pigmentpaste (hergestellt aus 14,1 Teilen Pigmentblack C.I.P. Bl. 7 durch Sandausmahlung in 8,7 Teilen Butylacetat und 77,2 Teilen eines Pigmentbenetzungsmittels auf eine Mahlfeinheit von < 10 μm) und 28,6 Teile Bariumsulfatpaste (mit 70 % Bariumsulfat angerieben wie die vorstehende Schwarz-pigmentpaste) zu dem vorstehenden Gemisch gefügt. Nach Einstellung mit Butylacetat auf eine Spritzviskosität wie in den Beispielen 1 und 2 erhält man einen Festkörper von ca. 41 %.

Basislackbeispiel 4:

22,3 Teile des in Beispiel 2 der vorstehenden Tabelle 1 hergestellten Copolymerisats werden mit 11,0 Teilen des in den Beispielen 1 und 2 beschriebenen n-Butanol/iso-Butanol mischveretherten Melaminharzes vermischt und mit 18,7 Teilen Butylacetat verdünnt. Dann werden 30,8 Teile Rotpigmentpaste (erhalten durch Sandausmahlung von 26,5 Teilen Pigmentred, C.I.P.R. 170 mit 73,5 Teilen eines Pigmentbenetzinngsmittels und 17,2 Teilen der im Basislackbeispiel 3 verwendeten Bariumsulfatpaste zugesetzt. Nach Einstellen auf Spritzviskosität mit Butylacetat wie in den vorhergehenden Beispielen erhält man einen Festkörper von ca. 43 %.

Eisenphosphatierte Stahlbleche werden mit einer üblichen Elektrotauchlackierung grundiert, eingebrannt und mit üblichen Lackeinbrennfüllern beschichtet. Diese werden ebenfalls eingebrannt. Auf die derart vorbereiteten Bleche werden die vorstehenden Basislacke mit einem Spritzdruck von 5 bar so aufgetragen, daß eine Trockenfilmschichtdicke von 10-15 μm (Basislackbeispiel 1 und 2) bzw. 20-25 μm (Basislackbeispiel 3 und 4) resultiert. Nach einer Abluftzeit von 10 Min. wird eine transparente Deckschicht in einer Schichtstärke von 50 μm appliziert. Nach dem Ablüften wird 20 Min. bei 150 °C eingebrannt.

Die erhaltenen Überzüge haben einen hervorragenden Glanz, gute mechanische Eigenschaften sowie eine hohe Witterungsbeständigkeit. Die Basislackbeispiele 1 und 2 weisen einen ausgezeichneten Metallic-Effekt auf.

**Patentansprüche**
**Patentansprüche für folgende Vertragsstaaten : BE, DE, FR, GB, IT, SE**

1.  Überzugsmittel geeignet zur Erzeugung einer Basisschicht bei der Herstellung härtbarer Mehrschichtüberzüge, enthaltend ein hydroxylgruppenhaltiges (Meth)acryl-Copolymerisat, Vernetzungsmittel, Effektpigmente und/oder farbgebende Pigmente, und gegebenenfalls Füllstoffe,
    **dadurch gekennzeichnet,**
    daß das (Meth)-acryl-Copolymerisat erhältlich ist aus:
    a) 0.1 - 20 Gew.-% (Meth)acrylamid und/oder N-substituierten (Meth)-acrylamiden,
    b) 5.0 - 40 Gew.-% eines Umsetzungsprodukts aus Glycidyl(meth)-acrylat mit aromatischen Monocarbonsäuren und/oder aromatischen Dicarbonsäuremonoestern, wobei das Verhältnis Oxiran-Gruppe zu Carboxyl-Gruppe 1:1 bis 1,5:1 sein soll,
    c) 10 - 40 Gew.-% eines Hydroxyalkylesters der (Meth)acrylsäure mit 2-8 C-Atomen im Hydroxyalkylrest,
    d) 30 - 84.9 Gew.-% eines Alkylesters der (Meth)acrylsäure
    wobei die Summe der Komponenten a) bis d) 100 % beträgt.

2.  Überzugsmittel nach Anspruch 1, dadurch gekennzeichnet, daß das Vernetzungsmittel ein Aminoplastharz oder ein Polyisocyanat oder ein partiell verkapptes Polyisocyanat ist.

3.  Überzugsmittel nach einem der Ansprüche 1 oder 2, dadurch gekennzeichnet, daß es als Effektpigmente Metall-Schuppenpigmente und/oder Perlglanzpigmente enthält.

4.  Überzugsmittel nach einem der Ansprüche 1 bis 3, dadurch gekennzeichnet, daß es Metallschuppenpigmente und gegebenenfalls farbgebende Pigmente sowie gegebenenfalls Füllstoffe enthält.

**5.** Überzugsmittel nach einem der Ansprüche 1 bis 3, dadurch gekennzeichnet, daß es farbgebende Pigmente und gegebenenfalls Füllstoffe enthält.

**6.** Überzugsmittel nach einem der Ansprüche 1 bis 3, dadurch gekennzeichnet, daß es Perlglanzpigmente und farbgebende Pigmente sowie gegebenenfalls Metallschuppenpigmente enthält.

**7.** Verfahren zur Herstellung eines Mehrschichtüberzuges auf einem Substrat, dadurch gekennzeichnet, daß man auf das Substrat eine Basisschicht aus einem Überzugsmittel gemäß einem der Ansprüche 1 bis 6 aufbringt, nach dem Naß-in-Naß-Verfahren eine transparente Deckschicht auf die Basisschicht appliziert und anschließend beide Schichten gemeinsam härtet.

**8.** Verwendung der Überzugsmittel nach einem der Ansprüche 1 bis 6, zur Herstellung von Basisschichten für härtbare Mehrschichtüberzüge.

**Patentansprüche für folgenden Vertragsstaat : ES**

**1.** Verfahren zur Herstellung eines Mehrschichtüberzuges auf einem Substrat, dadurch gekennzeichnet, daß man auf das Substrat eine Basisschicht aus einem Überzugsmittel, enthaltend ein hydroxylgruppenhaltiges (Meth)acryl-Copolymerisat, Vernetzungsmittel, Effektigmente und/oder farbgebende Pigmente, und gegebenenfalls Füllstoffe, aufbringt, nach dem Naß-in-Naß-Verfahren eine transparente Decksticht auf die Basisschicht appliziert und anschließend beide Schichten gemeinsam härtet, wobei das (Meth)-acry-Copolymerisat erhältlich ist aus:
a) 0.1 - 20 Gew.-% (Meth)acrylamid und/oder N-substituierten (Meth)-acryl-amiden,
b) 5.0 - 40 Gew.-% eines Umsetzungsprodukts aus Glycidyl(meth)-acrylat mit aromatischen Monocarbonsäuren und/oder aromatischen Dicarbonsäure-monoestern, wobei das Verhältnis Oxiran-Gruppe zu Carboxyl-Gruppe 1:1 bis 1,5:1 sein soll,
c) 10 - 40 Gew.-% eines Hydroxyalkylesters der (Meth)acrylsäure mit 2-8 C-Atomen im Hydroxyalkrest,
d) 30 - 84.9 Gew.-% eines Alkesters der (Meth) acrylsäure wobei die Summe der Komponenten a) bis d) 100% beträgt.

**2.** Verfahren nach Anspruch 1, dadurch gekennzeichnet, daß das Vernetzungsmittel ein Aminoplastharz oder ein Polyisocyanat oder ein parttiell verkapptes Polyisocyanat ist.

**3.** Verfahren nach einem der Ansprüche 1 oder 2, dadurch gekennzeichnet, daß als Effektpigmente Metall-Schuppenpigmente und/oder Perlglanzpigmente verwendet werden.

**4.** Verfahren nach einem der Ansprüche 1 bis 3, dadurch gekennzeichnet, daß Metallschuppenpigmente und gegebenenfalls farbgebende Pigmente sowie gegebenenfalls Füllstoffe im Überzugsmittel verwendet werden.

**5.** Verfahren nach einem der Ansprüche 1 - 3, dadurch gekennzeichnet, daß farbgebende Pigmente und gegebenenfalls Füllstoffe im Überzugsmittel verwendet werden.

**6.** Verfahren nach einem der Ansprüche 1 bis 3, dadurch gekennzeichnet, daß Perlglanzpigmente und farbgebende Pigmente sowie gegebenenfalls Metallschuppenpigmente im Überzugsmittel verwendet werden.

**Claims**

**Claims for the following Contracting States : BE, DE, FR, GB, IT, SE**

**1.** Coating composition suitable for the production of a base coat in the production of curable multilayer coatings, containing a (meth)acrylic copolymer containing hydroxyl groups, crosslinking agents, effect pigments and/or coloured pigments and optionally extenders,
**characterised in that,**
the (meth)acrylic copolymer is obtainable from:
a) 0.1 - 20 wt.% of (meth)acrylamide and/or N-substituted (meth)acrylamides,

b) 5.0 - 40 wt.% of a reaction product of glycidyl (meth)acrylate with aromatic monocarboxylic acids and/or aromatic dicarboxylic acid monoesters, wherein the oxirane group to carboxyl group ratio should be 1:1 to 1.5:1,

c) 10 - 40 wt.% of a (meth)acrylic acid hydroxyalkyl ester with 2 - 8 C atoms in the hydroxyalkyl residue,

d) 30 - 84.9 wt.% of a (meth)acrylic acid alkyl ester,

wherein the sum of components a) to d) is 100%.

2. Coating composition according to claim 1, characterised in that the crosslinking agent is an amino resin or a polyisocyanate or a partially capped polyisocyanate.

3. Coating composition according to one of claims 1 or 2, characterised in that it contains metallic flake pigments and/or pearlescent pigments as effect pigments.

4. Coating composition according to one of claims 1 to 3, characterised in that it contains metallic flake pigments and, optionally, coloured pigments, optionally together with extenders.

5. Coating composition according to one of claims 1 to 3, characterised in that it contains coloured pigments and optionally extenders.

6. Coating composition according to one of claims 1 to 3, characterised in that it contains pearlescent pigments and coloured pigments, optionally together with metallic flake pigments.

7. Process for the production of a multilayer coating on a substrate, characterised in that a base coat of a coating composition according to one of claims 1 to 6 is applied to the substrate, a transparent top coat is applied on top of the base layer using the wet-on-wet process and both layers are then cured together.

8. Use of the coating composition according to one of claims 1 to 6 for the production of base coats for curable multilayer coatings.

**Claims for the following Contracting State : ES**

1. Process for the production of a multilayer coating on a substrate, characterised in that a base coat of a coating is applied to a substrate, which coating contains a (meth)acrylic copolymer containing hydroxyl groups, crosslinking agents, effect pigments and/or coloured pigments and optionally extenders, a transparent top coat is applied on top of the base coat using the wet-on-wet process and both layers are then cured together, wherein the (meth)acrylic copolymer is obtainable from:

a) 0.1 - 20 wt.% of (meth)acrylamide and/or N-substituted (meth)acrylamides,

b) 5.0 - 40 wt.% of a reaction product of glycidyl (meth)acrylate with aromatic monocarboxylic acids and/or aromatic dicarboxylic acid monoesters, wherein the oxirane group to carboxyl group ratio should be 1:1 to 1.5:1,

c) 10 - 40 wt.% of a (meth)acrylic acid hydroxyalkyl ester with 2 - 8 C atoms in the hydroxyalkyl residue,

d) 30 - 84.9 wt.% of a (meth)acrylic acid alkyl ester, wherein the sum of components a) to d) is 100%.

2. Process according to claim 1, characterised in that the crosslinking agent is an amino resin or a polyisocyanate or a partially capped polyisocyanate.

3. Process according to one of claims 1 or 2, characterised in that metallic flake pigments and/or pearlescent pigments are used as effect pigments.

4. Process according to one of claims 1 to 3, characterised in that metallic flake pigments and optionally coloured pigments, optionally together with extenders are used in the coating composition.

5. Process according to one of claims 1 to 3, characterised in that coloured pigments and optionally extenders are used in the coating composition.

**6.** Process according to one of claims 1 to 3, characterised in that pearlescent pigments and coloured pigments, optionally together with metallic flake pigments are used in the coating composition.

**Revendications**

**Revendications pour les Etats contractants suivants : BE, DE, FR, GB, IT, SE**

**1.** Composition de revêtement appropriée à la réalisation d'une couche de base dans la préparation des revêtements multicouches durcissables, contenant un copolymérisat (méth)acrylique renfermant des groupes hydroxyles, des agents de réticulation des pigments à effet spécial et/ou des pigments colorants et éventuellement des poduits de remplissage, caractérisée en ce que le copolymérisat (méth)acrylique est obtenu à partir de
a) 0,1 à 20% en poids de (méth)acrylamide et/ou de (méth) acrylamides N-substitués,
b) 5,0 à 40% en poids d'un produit de réaction résultant de la réaction du (méth)acrylate de glycidyle avec des acides monocarboxyliques aromatiques et/ou des monoesters d'acides dicarboxyliques aromatiques, le rapport groupes oxirannes/groupes carboxyles étant compris entre 1:1 et 1,5:1,
c) 10 à 40% en poids d'un ester hydroxyalkylique de l'acide (méth)acrylique ayant 2 à 8 atomes de C dans le reste hydroxyalkyle,
d) 30 à 84,9% en poids d'un ester alkylique de l'acide (méth)acrylique,
la somme des composants a) à d) étant égal à 100%.

**2.** Composition de revêtement selon la revendication 1, caractérisée en ce que l'agent de réticulation est une résine aminoplaste ou un polyisocyanate ou un polyisocyanate partiellement protégé.

**3.** Composition de revêtement selon la revendication 1 ou 2, caractérisée en ce qu'elle contient comme pigments à effet spécial des pigments lamellaires métalliques et/ou des pigments nacrés.

**4.** Composition de revêtement selon l'une des revendications 1 à 3, caractérisée en ce qu'elle contient des pigments lamellaires métalliques et éventuellement des pigments colorants, ainsi qu'éventuellement des produits de remplissage.

**5.** Composition de revêtement selon l'une des revendications 1 à 3, caractérisée en ce qu'elle contient des pigments colorants et éventuellement des produits de remplissage.

**6.** Composition de revêtement selon l'une des revendications 1 à 3, caractérisée en ce qu'elle contient des pigments nacrés et des pigments colorants, ainsi qu'éventuellement des pigments lamellaires métalliques.

**7.** Procédé pour la préparation d'un revêtement multicouche sur un substrat, caractérisé en ce que l'on applique sur le substrat une couche de base constituée d'une composition de revêtement selon l'une des revendications 1 à 6, en ce que l'on applique sur la couche de base une couche de recouvrement transparente selon le procédé humide sur humide et en ce que l'on durcit ensuite ensemble les deux couches.

**8.** Utilisation des compositions de revêtement selon l'une des revendications 1 à 6 pour la préparation de couches de base pour les revêtements multicouches durcissables.

**Revendications pour l'Etat contractant suivant : ES**

**1.** Procédé pour la préparation d'un revêtement multicouche sur un substrat, caractérisé en ce que l'on applique sur le substrat une couche de base constituée d'une composition de revêtement contenant un copolymérisat (méth)acrylique renfermant des groupes hydroxyles, des agents de réticulation, des pigments à effet spécial et/ou des pigments colorants et éventuellement des produits de remplissage, en ce que l'on applique sur la couche de base une couche de recouvrement transparente selon le procédé humide sur humide et en ce que l'on durcit ensuite ensemble les deux couches, le copolymérisat étant obtenu à partir de :
a) 0,1 à 20% en poids de (méth)acrylamide et/ou de (méthy)acrylamides N-substitués,

b) 5,0 à 40% en poids d'un produit de réaction résultant de la réaction du (méth)acrylate de glycidyle avec des acides monocarboxyliques aromatiques et/ou des monoesters d'acides dicarboxyliques aromatiques, le rapport groupes oxirannes/groupes carboxyles étant compris entre 1:1 et 1,5:1,

c) 10 à 40% en poids d'un ester hydroxyalkylique de l'acide (méth)acrylique ayant 2 à 8 atomes de C dans le reste hydroxyalkyle,

d) 30 à 84,9% en poids d'un ester alkylique de l'acide (méth)acrylique,

la somme des composants a) à d) étant égal à 100%.

2. Procédé selon la revendication 1, caractérisé en ce que l'agent de réticulation est une résine aminoplaste, un polyisocyanate ou un polyisocyanate partiellement protégé.

3. Procédé selon la revendication 1 ou 2, caractérisé en ce que l'on utilse, comme pigments à effet spécial, des pigments lamellaires métalliques et/ou des pigments nacrés.

4. Procédé selon l'une des revendications 1 à 3, caractérisé en ce que l'on utilise des pigments lamellaires métalliques et éventuellement des pigments colorants, ainsi qu'éventuellement des produits de remplissage dans la composition de revêtement.

5. Procédé selon l'une des revendications I à 3, caractérisé en ce que l'on utilise des pigments colorants et éventuellement des produits de remplissage dans la composition de revêtement.

6. Procédé selon l'une des revendications 1 à 3, caractérisé en ce que l'on utilise des pigments nacrés, des pigments colorants et éventuellement des pigments lamellaires métalliques dans la composition de revêtement.